(19) Europäisches Patentamt
European Patent Office
Office européen des brevets

(11) **EP 3 075 870 B1**

(12) **EUROPÄISCHE PATENTSCHRIFT**

(45) Veröffentlichungstag und Bekanntmachung des Hinweises auf die Patenterteilung:
**02.08.2017 Patentblatt 2017/31**

(51) Int Cl.:
*C22C 9/04* (2006.01)    *C22F 1/08* (2006.01)
*F16C 33/00* (2006.01)    *C21D 8/02* (2006.01)
*C21D 9/00* (2006.01)

(21) Anmeldenummer: **16000420.6**

(22) Anmeldetag: **20.02.2016**

(54) **KUPFER-ZINK-LEGIERUNG, BANDFÖRMIGER WERKSTOFF AUS DIESER LEGIERUNG, VERFAHREN ZUR HERSTELLUNG EINES HALBZEUGS AUS DIESER LEGIERUNG UND GLEITELEMENT AUS DIESER LEGIERUNG**

COPPER-ZINC ALLOY, STRIP MATERIAL MADE FROM THIS ALLOY, METHOD FOR PRODUCING A SEMIFINISHED PRODUCT MADE FROM THIS ALLOY AND SLIDING ELEMENT MADE FROM THIS ALLOY

ALLIAGE CUIVRE-ZINC, MATIERE EN BANDE EN CET ALLIAGE, PROCEDE DE FABRICATION D'UN SEMI-PRODUIT A PARTIR DE CET ALLIAGE ET ELEMENT COULISSANT EN CET ALLIAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.03.2015 DE 102015004221**

(43) Veröffentlichungstag der Anmeldung:
**05.10.2016 Patentblatt 2016/40**

(73) Patentinhaber: **Wieland-Werke AG
89079 Ulm (DE)**

(72) Erfinder:
- **Voggeser, Volker
  89250 Senden (DE)**
- **Thumm, Gerhard
  89155 Erbach (DE)**
- **Kuhn, Hans-Achim
  89257 Illertissen (DE)**
- **Bell, Jeremy
  Wolverhampton, WV9 5SH (GB)**
- **Ababneh, Maher
  Birmingham, B17 8TH (GB)**

(56) Entgegenhaltungen:
**US-A1- 2012 251 383    US-A1- 2013 089 459**

**EP 3 075 870 B1**

**Beschreibung**

Die Erfindung betrifft eine Kupfer-Zink-Legierung, einen bandförmigen Werkstoff aus einer Kupfer-Zink-Legierung, ein Verfahren zur Herstellung von Halbzeugen sowie ein Gleitelement.

Es ist bekannt, für Gleitelemente bleireduzierte Kupfer-Zink-Legierungen zu verwenden, die manganhaltige Silizide enthalten. Silizide verleihen als Hartphasen einer Kupfer-Zink-Legierung eine hohe Beständigkeit gegen abrasiven Verschleiß. Ferner bewirken sie aufgrund ihrer geringen Neigung zum Verschweißen eine bessere Beständigkeit gegen adhäsiven Verschleiß. Die Legierungen enthalten darüber hinaus meist weitere Legierungsbestandteile in erheblicher Menge, wie beispielsweise Al, Ni und Fe. Das Gefüge solcher Legierungen besteht entweder aus einer Kombination von α- und β-Phase oder überwiegend aus β-Phase. Halbzeuge aus derartigen Legierungen werden üblicherweise mit Verfahren hergestellt, die mindestens eine Warmumformung umfassen.

Aus der Druckschrift JP 09316570 A sind Kupfer-Zink-Legierungen mit Mangansiliziden bekannt. Bei diesen Legierungen beträgt der Anteil der β-Phase bis zu 30 %. Die Legierungen enthalten keinen Phosphor. Die Legierungen werden als zylindrische Blöcke mit Durchmesser 120 mm abgegossen. Anschließend werden zwei Warmumformung bei 700 °C beziehungsweise 700 - 750 °C durchgeführt.

Ferner sind aus der Druckschrift DE 10 2005 059 391 A1 Synchronringe aus bleireduzierten Kupfer-Zink-Legierungen bekannt. Die Legierungen enthalten Mangan in Anteilen von 0,5 bis 5 Gew.-%, Silicium in Anteilen von 0,3 bis 2 Gew.-%, Aluminium in Anteilen von 0,5 bis 2,5 Gew.-%, Eisen in Anteilen von 0,3 bis 1 Gew.-% und Nickel in Anteilen vom 0,5 bis 5 Gew.-%. Der Phosphor-Anteil beträgt weniger als 0,02 Gew.-%. Intermetallische Phasen aus Mangan, Eisen und Silicium sind in den Legierungen vorhanden. Der Kupferanteil variiert zwischen 55 und 75 Gew.-%, so dass davon auszugehen ist, dass die Phasenbeschaffenheit des jeweiligen Werkstoffs von untergeordneter Bedeutung ist. Die Synchronringe werden spanend hergestellt. Über die Herstellung des hierbei verwendeten Ausgangsmaterials sind der Druckschrift keine Informationen zu entnehmen.

Des Weiteren sind in der Patentschrift DE 10 2007 029 991 B4 hinsichtlich Kaltumformbarkeit verbesserte Kupfer-Zink-Legierungen sowie Verfahren zur Herstellung von Rohren und Stangen aus diesen Legierungen offenbart. Bei den Kupfer-Zink-Legierungen sind die Anteile an Silicium, Mangan, Eisen und Nickel so eingestellt, dass im Gefüge des Werkstoffs sowohl Eisen-Nickel-Manganhaltige Mischsilizide mit stängeliger Form als auch an Eisen und Nickel angereicherte Mischsilizide mit globularer Gestalt vorliegen. Das Gefüge des Werkstoffs besteht aus einer α-Matrix, in die zusätzlich zu den Siliziden mindestens 5 Vol.-% und bis zu 50 Vol.-% β-Phase eingelagert ist. Die globularen Silizide werden als Grund dafür gesehen, dass eine Stabilisierung der β-Phase stattfindet. Die heterogene Matrixstruktur aus α- und β-Phase gewährleistet zusammen mit dem außerordentlich hohen Gehalt an Hartphasen, insbesondere der Eisen-Nickel-Mangan-haltigen Mischsilizide, eine zielgerichtete komplexe Verschleißbeständigkeit der Bauteile aus diesen Legierungen. Die Verarbeitung der Legierung umfasst Strangpressen in einem Temperaturbereich von 600 bis 800 °C. Diese Warmumformung wird begünstigt, indem das Gefüge im Gusszustand bis zu 50 Vol.-% β-Phase aufweist. Rohre aus diesen Legierungen erreichen Bruchdehnungswerte bis ungefähr 13 %. Aus der Druckschrift US 2013/0089459 A1 sind Kupfer-Zink-Legierungen bekannt, die Mangan, Silizium und Mangan-Silizide enthalten. Aus dem Stand der Technik sind also keine mangansilizidhaltigen Kupfer-Zink-Legierungen bekannt, aus denen mittels Verfahren, die als Umformschritte lediglich Kaltumformungen umfassen, Werkstoffe hergestellt werden können, die hervorragende Eigenschaften für die Verwendung als Gleitelement aufweisen. Der Erfindung liegt die Aufgabe zugrunde, eine verbesserte Legierung anzugeben, aus der in einem gieß- und umformtechnischen Verfahren, das als Umformschritte lediglich Kaltumformungen umfasst, Werkstoffe mit hervorragenden tribologischen Eigenschaften hergestellt werden können. Ferner liegt der Erfindung die Aufgabe zugrunde, ein Verfahren zur Herstellung eines Halbzeugs aus einer derartigen Legierung sowie ein Gleitelement aus einer derartigen Legierung anzugeben.

Die Erfindung wird bezüglich einer Legierung durch die Merkmale des Anspruchs 1, bezüglich eines bandförmigen Werkstoffs durch die Merkmale des Anspruchs 6, bezüglich eines Verfahrens durch die Merkmale des Anspruchs 7 und bezüglich eines Gleitelements durch die Merkmale des Anspruchs 10 wiedergegeben. Die weiteren rückbezogenen Ansprüche betreffen vorteilhafte Aus- und Weiterbildungen der Erfindung.

Die Erfindung schließt eine Kupfer-Zink-Legierung mit folgender Zusammensetzung (in Gewichts-%) ein:

67,0 bis 69,0 % Cu,
0,4 bis 0,6 % Si,
1,2 bis 1,6 % Mn,
0,03 bis 0,06 % P,
wahlweise noch bis maximal 0,5 % Al,
wahlweise noch bis maximal 0,15 % Ni,
wahlweise noch bis maximal 0,1 % Fe,
wahlweise noch bis maximal 0,1 % Pb,
wahlweise noch bis maximal 0,08 % Sn,

wahlweise noch bis maximal 0,1 % S,

Rest Zn und unvermeidbare Verunreinigungen. Erfindungsgemäß weist die Legierung ein Gefüge auf, das aus einer α-Phase-Matrix besteht, in der Einlagerungen an Mangansiliziden mit globularer Gestalt mit einem Anteil von mindestens 2 Vol.-% und bis zu 5 Vol.-% enthalten sind.

Die Erfindung geht dabei von der Überlegung aus, dass die Zusammensetzung einer Kupfer-Zink-Legierung, die Mangansilizide enthält, in geeigneter Weise ausgewählt werden muss, um in einem metallurgischen Verfahren, das als Umformschritte lediglich Kaltumformungen umfasst, aus der Legierung einen Werkstoff mit hervorragenden Gleiteigenschaften herstellen zu können. Der Werkstoff soll also durch ein umformtechnisches Verfahren, das keine Warmumformung, wie beispielsweise Warmwalzen oder Warmpressen, umfasst, herstellbar sein. Überraschenderweise hat sich gezeigt, dass ausgehend von einem Gussformat mit der oben spezifizierten Legierungszusammensetzung durch eine Abfolge von Kaltumformungen und Wärmebehandlungen ein Werkstoff hergestellt werden kann, der ein Gefüge aufweist, das aus einer reinen α-Phase-Matrix besteht, in der Mangansilizide mit globularer Gestalt eingelagert sind. Der Anteil dieser globularen Mangansilizide beträgt dabei mindestens 2 Vol.-% und höchstens 5 Vol.-%. Die quantitative Auswahl der Legierungselemente, insbesondere die der Elemente Cu, Zn, Fe, Ni und Al, erfolgt also so, dass die Matrix des Werkstoffs lediglich α-Phase und keine β-Phase enthält. Dies verleiht dem Werkstoff eine exzellente Kaltumformbarkeit.

Die Matrix weist ein kubisch-flächenzentriertes Kristallgitter auf. Damit weicht der Werkstoff von üblichen Messingwerkstoffen für Gleitanwendungen ab. Messingwerkstoffe mit kubisch-flächenzentriertem Kristallgitter neigen erfahrungsgemäß zur Adhäsion und damit zum Verschleißen. Entgegen dieser Erfahrung weist ein Werkstoff aus einer erfindungsgemäßen Legierung hervorragende tribologische Eigenschaften, insbesondere als Gleitelement, auf. Ursache hierfür ist die erfindungsgemäße Wahl der Anteile der Elemente Mn und Si in Relation zur Zusammensetzung der Matrix. Menge, Größe, Form und Verteilung der Mangan-silizide beeinflussen die Eigenschaften des Werkstoffs, insbesondere die Sprödigkeit bei Umgebungstemperatur und bei erhöhter Temperatur. Die Silizide nehmen aber auch Einfluss auf die Umformbarkeit des Werkstoffs. Bei der erfindungsgemäßen Zusammensetzung der Legierung werden überwiegend Mangansilizide mit globularer Gestalt gebildet. Der Anteil dieser Mangansilizide beträgt mindestens 2 Vol.-% und höchstens 5 Vol.-% im Werkstoff. Verglichen mit herkömmlichen Messingwerkstoffen, die in Gleitanwendungen verwendet werden und Mangansilizide enthalten, ist der volumenbezogene Anteil der Mangansilizide in der erfindungsgemäßen Legierung gering. Ein Silizidanteil über 5 Vol.-% würde die Gieß- und Kaltumformbarkeit des Werkstoffs beeinträchtigen. Bevorzugt beträgt der Silizidanteil nicht mehr als 4 Vol.-%, da in diesem Bereich die Gieß- und Kaltumformbarkeit des Werkstoffs besonders günstig sind. Bei einem Silizidanteil unter 2 Vol.-% würden die Festigkeitseigenschaften und die tribologischen Eigenschaften des Werkstoffs, insbesondere die Verschleißbeständigkeit, ungenügend sein. Der Silizidanteil muss also in einem engen Fenster eingestellt werden, um einerseits ein Herstellverfahren ohne Warmumformung zu erlauben und um andererseits die erforderlichen mechanischen und tribologischen Eigenschaften des Werkstoffs zu gewährleisten. Besonders vorteilhafte Eigenschaften ergeben sich, wenn der Mn-Anteil mindestens 1,3 Gew.-% und höchstens 1,45 Gew.-% beträgt.

Der Phosphoranteil beträgt mindestens 0,03 Gew.-% und höchstens 0,06 Gew.-%. Phosphor dient zur Desoxidation. Freier Phosphor begünstigt die Gießbarkeit der Legierung, indem er die Viskosität der Schmelze reduziert. Darüber hinaus verbessert er die Eigenschaften der erfindungsgemäßen Legierung unter Belastung bei erhöhter Temperatur. Andererseits kann Phosphor mit anderen Legierungsbestandteilen spröde Phosphide bilden. Deshalb muss der Phosphoranteil genau kontrolliert werden: Bei weniger als 0,03 Gew.-% ist die Verbesserung der Gießbarkeit und der Warmfestigkeit nicht ausreichend. Wenn der Phosphor-Anteil mehr als 0,06 Gew.-% beträgt, ist das Risiko der Phosphidbildung zu groß. Bevorzugt beträgt der Phosphor-Anteil höchstens 0,05 Gew.-%, besonders bevorzugt mindestens 0,035 Gew.-% und höchstens 0,045 Gew.-%. In diesem engen Fenster weist die Legierung ausgezeichnete Eigenschaften in Bezug auf Verarbeitung und Verschleißfestigkeit auf.

Die Legierung enthält wahlweise noch bis maximal 0,50 Gew.-% Aluminium. Aluminium ist in diesen Mengen vollständig in der Legierung löslich. Größere Zusätze an Aluminium würden jedoch die Ausbildung der β-Phase begünstigen. Eine Reduzierung des Maximalgehalts an Al auf 0,45 Gew.-%, günstiger noch auf 0,40 Gew.-%, ist unter diesem Aspekt bevorzugt. Ferner wirkt Aluminium als Korrosionsschutz. Es hat sich gezeigt, dass Aluminium vorteilhaft ist, wenn die Legierung nach dem Gießen mit Wasser abgeschreckt wird. Es resultiert in diesem Fall eine relativ saubere Oberfläche. Deshalb kann der Aluminiumanteil bevorzugt mindestens 0,2 Gew.-% betragen.

Die Anteile an Ni und Fe sind auf 0,15 Gew.-% beziehungsweise 0,1 Gew.-% beschränkt. Eisen und Nickel initiieren beim Gießen der Legierung in Kombination mit Mangan die Bildung von eisen- beziehungsweise nickel- und manganhaltigen Mischsiliziden. Solche Mischsilizide weisen eine vergleichsweise große räumliche Ausdehnung auf. Bei der vorliegenden erfindungsgemäßen Legierung werden jedoch kleine Silizide angestrebt, die im Idealfall reine Mangansilizide sind. Eisen und Nickel stellen keinen signifikanten Beitrag in der Zusammensetzung der globularen Mangansilizide dar.

Der Pb-Anteil ist auf maximal 0,1 Gew.-% eingeschränkt, da für Gleitlager Legierungen mit möglichst geringem Pb-Gehalt gefordert werden. Der Pb-Anteil sollte also so gering wie technisch möglich und wirtschaftlich sinnvoll gehalten werden.

Den Elementen Sn und S kommt im Bezug auf die erfindungsgemäße Legierung nur eine untergeordnete Bedeutung zu. Es handelt sich bei diesen Elementen, speziell bei Sn, um Einträge aus dem Wertstoffkreislauf, die aus wirtschaftlichen Gründen akzeptiert werden. Um zu verhindern, dass sie die Legierung in ungewollter Weise beeinflussen, sind ihre Obergrenzen auf die jeweils spezifizierten Werte festgelegt. Da Sn den Bereich der $\alpha$-Phase einengt, sollte der Sn-Anteil bevorzugt den Wert 0,02 Gew.-% nicht überschreiten.

Aus den spezifizierten Werten der einzelnen Legierungsbestandteile folgt, dass der Zink-Anteil der Legierung zwischen 27,3 und 31,4 Gew.-% liegt. Bevorzugt beträgt er mindestens 28,5 und höchstens 30,8 Gew.-%. Aus Kostengründen sollte der Zink-Anteil möglichst hoch sein. Andererseits darf er nicht zu hoch sein, damit keine $\beta$-Phase gebildet wird. Der genannte Bereich hat sich als besonders günstiger Bereich erwiesen.

Die unvermeidbaren Verunreinigungen sollten insgesamt nicht mehr als 0,3 Gew.-%, bevorzugt nicht mehr als 0,05 Gew.-% betragen. Bevorzugt wird dieser Wert auch zusammen mit den Elementen Sn und S nicht überschritten.

Werkstoffe, die ohne Warmumformung aus einem Gussformat mit der erfinderischen Legierungszusammensetzung gefertigt werden, können durch die folgenden mechanischen Eigenschaften bei 20 °C charakterisiert werden:

- Zugfestigkeit $R_m$: mindestens 500 MPa, bevorzugt mindestens 550 MPa
- Streckgrenze $Rp_{0,2}$: mindestens 360 MPa, bevorzugt mindestens 400 MPa
- Härte: mindestens 150 $H_v$, bevorzugt mindestens 170 $H_v$
- Bruchdehnung $A_{10}$: mindestens 15 %, bevorzugt mindestens 20 %

Eine besondere Eigenschaft dieser Werkstoffe ist, dass die Bruchdehnung bei 300 °C mindestens so groß wie bei 20 °C ist. Insbesondere kann die Bruchdehnung bei 300 °C größer sein als die Bruchdehnung bei 20 °C. Typischerweise beträgt die Bruchdehnung bei 300 °C mindestens das 1,2-fache der Bruchdehnung bei 20 °C. Diese besondere Eigenschaft ist vorteilhaft in Anwendungen mit hochbelasteten Lagern. Sie gewährleistet auch bei erhöhter Temperatur eine große Duktilität und stellt damit eine ausreichende Verträglichkeit des Lagerwerkstoffs für Partikel sicher.

In bevorzugter Ausgestaltung der Erfindung kann das Verhältnis von Cu-Anteil der Legierung zum Zn-Äquivalent der Legierung mindestens 2,1 und höchstens 2,4 betragen, wobei das Zn-Äquivalent der Legierung wie folgt aus den Anteilen der jeweiligen Legierungselemente berechnet wird (in Gew.-%):

$$\text{Zn-Äquivalent} = \text{Anteil Zn} + 0{,}9 \times \text{Anteil Fe} - 1{,}3 \times \text{Anteil Ni} + 6 \times \text{Anteil Al} + 2 \times \text{Anteil Sn}.$$

Durch diese besondere Ausgestaltung der Erfindung wird gewährleistet, dass die Matrix des Werkstoffs immer lediglich $\alpha$-Phase aufweist. Beträgt das Verhältnis aus Cu-Anteil der Legierung zum Zn-Äquivalent der Legierung mindestens 2,1, dann ist es praktisch unmöglich, dass $\beta$-Phase im Werkstoff vorhanden ist. Diese zusätzliche Bedingung für die Zusammensetzung der Legierung spielt insbesondere dann eine Rolle, wenn der Cu-Anteil der Legierung im unteren Teil des spezifizierten Bereichs (67 - 69 Gew.-%) liegt. In solchen Fällen muss der Aluminiumanteil der Legierung auf Werte von höchstens 0,45 Gew.-% eingeschränkt werden.

Bei der Berechnung des Zn-Äquivalents werden die Legierungsanteile der Elemente Mn und Si nicht berücksichtigt. Dem liegt die Annahme zugrunde, dass diese beiden Elemente nahezu ausschließlich in Form von Ausscheidungen, also als Mangansilizide, in der Legierung vorliegen und nicht in der Matrix gelöst sind. Diese Annahme trifft insbesondere dann zu, wenn der Gewichtsanteil an Mangan mindestens das 2,4-fache und höchstens das 3,4-fache des Gewichtsanteils an Silizium beträgt. Besonders bevorzugt beträgt der Gewichtsanteil an Mangan mindestens das 2,6-fache und höchstens das 3,2-fache des Gewichtsanteils an Silizium.

Vorteilhafterweise kann die Summe aus Eisen- und Nickelanteil höchstens 0,22 Gew.-% betragen. Hierdurch wird die Bildung von eisen- beziehungsweise nickel- und manganhaltigen Mischsiliziden weiter unterbunden. Eisen und Nickel initiieren die Bildung dieser Mischsilizide beim Gießen der Legierung. Je geringer die Gesamtmenge dieser beiden Elemente ist, desto weniger Mischsilizide können gebildet werden. Beträgt die Summe aus Eisen- und Nickelanteil höchstens 0,15 Gew.-%, dann ist die Bildung von Mischsiliziden deutlich eingeschränkt.

Bei einer vorteilhaften Ausführungsform der Erfindung können die Mangansilizide mit globularer Gestalt in fein verteilter Form in der Matrix vorliegen und eine Größe von höchstens 1 $\mu$m aufweisen, wobei 30 bis 50 Mangansilizide mit globularer Gestalt pro 100 $\mu$m$^2$ vorhanden sind. Diese Ausgestaltung der Silizide ist Ursache für die hervorragenden tribologischen Eigenschaften der Legierung, insbesondere in der Anwendung als Gleitlager. Mangansilizide können vom Typ $Mn_5Si_3$ oder $MnSi$ sein. Untersuchungen der molaren Zusammensetzung der Silizide haben ergeben, dass in der erfinderischen Legierung beide Typen vorliegen, näherungsweise in gleicher Häufigkeit. Die Mangansilizide weisen eine globulare, also kugelartige oder zumindest kugelähnliche Gestalt auf. Ihre Größe beträgt höchstens 1 $\mu$m. Als Maß

für die Größe wird hier der Kugeldurchmesser oder allgemeiner der kugel-äquivalente Durchmesser verwendet. Die Silizide liegen in fein verteilter Form in der Matrix vor. Im Schliffbild erscheinen sie wie fein dispergierte Tröpfchen, die mit leicht variierender Dichte, also nicht homogen, in der Matrix verteilt sind. Es gibt also Bereiche mit einer von der mittleren Siliziddichte nach oben abweichenden Siliziddichte, ebenso wie es Bereiche gibt, in denen die Siliziddichte von der mittleren Siliziddichte nach unten abweicht. Dieses Erscheinungsbild lässt sich als nebelschwadenartig oder wolkenähnlich beschreiben. Bei einer 500-fachen Vergrößerung können 30 bis 50 globulare Partikel pro 100 $\mu m^2$ gezählt werden.

In bevorzugter Ausgestaltung der Erfindung können in der Matrix zusätzlich Mangansilizide mit stängeliger Gestalt enthalten sein, wobei die Längserstreckung dieser Mangansilizide höchstens 50 $\mu m$, bevorzugt höchstens 30 $\mu m$, beträgt und wobei die Anzahl der Mangansilizide mit stängeliger Gestalt höchstens 2 % der Anzahl der Mangansilizide mit globularer Gestalt ist. Unter stängeliger Gestalt ist hier eine Form der Silizide zu verstehen, bei der mehrere einzelne Silizidpartikel mit geringem Abstand zueinander entlang einer Linie angeordnet sind. Die einzelnen Silizidpartikel einer solchen Anordnung sind größer als die Mangan-silizide mit globularer Gestalt, weshalb die Mangansilizide mit stängeliger Gestalt gut erkennbar sind und sich deutlich vor dem Hintergrund der fein verteilten globularen Mangansilizide abheben. Die Größe der einzelnen Silizidpartikel, die zu einem Mangansilizid mit stängeliger Gestalt gehören, liegt typischerweise im Bereich 1 $\mu m$ bis 10 $\mu m$. Die Anordnung der Silizide mit stängeliger Gestalt erinnert an die Anordnung von Gliedern einer Kette oder an die Anordnung von Perlen auf einer Schnur, so dass als Synonym für "stängelig" auch die Adjektive "kettenartig" oder "perlenschnurartig" zur Beschreibung verwendet werden können. Die Längserstreckung einer solchen Anordnung von Mangansiliziden beträgt höchstens 50 $\mu m$. Diese Mangansilizide mit stängeliger Gestalt sind Reste von größeren Siliziden, die sich unmittelbar nach dem Gießen während des Erstarrens und Abkühlens der Legierung durch Diffusion und Agglomeration von Primäraus-scheidungen bilden können und die bei der Kaltumformung des Werkstoffs zerkleinert und verstreckt werden. Für die Eigenschaften der Legierung sind die kleinen Mangansilizide mit globularer Gestalt vorteilhaft. Deshalb ist angestrebt, den Gieß- und Abkühlvorgang so zu gestalten, dass sich möglichst wenig große Silizide, sondern viele kleine Silizide bilden können. Die Größe und Häufigkeit der stängeligen Mangansilizide ist also ein Maß dafür, wie gut die Prozessführung beim Gieß- und Abkühlvorgang war: Je geringer die Längserstreckung der stängeligen Mangansilizide ist und je weniger dieser stängeligen Mangansilizide im Werkstoff vorhanden sind, desto besser werden die eingesetzten Mengen an Mangan und Silizium genutzt, um kleine Mangansilizide mit globularer Gestalt zu bilden. Dies ist günstig für die Eigenschaften des Werkstoffs. Bevorzugt beträgt die Längserstreckung der stängeligen Mangansilizide höchstens 10 $\mu m$. Die Anzahl der Mangansilizide mit stängeliger Gestalt beträgt höchstens 2 %, bevorzugt höchstens 1 % der Anzahl der Mangansilizide mit globularer Gestalt.

Es ist jedoch nicht ausgeschlossen, dass die größeren Mangansilizide mit stängeliger Gestalt einen vorteilhaften Effekt haben, indem sie als Hartpartikel die Adhäsionsneigung des Werkstoffs reduzieren. Ein weiterer möglicher Vorteil von Mangansiliziden mit stängeliger Gestalt kann sein, dass aufgrund der Diffusion der primär gebildeten Ausscheidungen in unmittelbarer Umgebung dieser relativ großen Mangansilizide Zonen gebildet sind, die frei von Ausscheidungspartikeln sind. Als eine Phase mit kubisch-flächenzentriertem Gitter tragen diese partikelfreien Zonen zur dynamischen Belastbarkeit des Werkstoffs bei, da sie plastische Verformung erlauben.

Ein weiterer Aspekt der Erfindung betrifft einen bandförmigen Werkstoff aus einer Kupfer-Zink-Legierung gemäß der vorstehend beschriebenen Erfindung. Unter bandförmigem Werkstoff werden hier alle Werkstoffe mit flachem Format verstanden, also beispielsweise Bänder, Bleche und Metallstreifen. Solche Formate werden umformtechnisch durch Walzverfahren hergestellt. Der bandförmige Werkstoff wird aus der erfindungsgemäßen Legierung bevorzugt in einem umformtechnischen Verfahren hergestellt, das als Umformschritte lediglich Kaltumformungen umfasst. Der Werkstoff ist also durch ein Verfahren herstellbar, das keine Warmumformung, wie beispielsweise Warmwalzen, umfasst. Bevorzugt wird der bandförmige Werkstoff hergestellt, indem die erfindungsgemäße Legierung als bandförmiges Gussformat von so geringer Dicke abgegossen wird, dass bis zur Erreichung der Endabmessung des Bandes als Umformschritte lediglich Kaltumformungen erforderlich sind. Der Vorteil eines derart hergestellten bandförmigen Werkstoffs ist der geringe Energieverbrauch, da eine Erwärmung des Werkstoffs zur Durchführung einer Warmumformung entfallen kann. Der bandförmige Werkstoff eignet sich hervorragend zu Herstellung von Bauteilen, die unter Gleitreibung belastet sind, und die aus bandförmigem Material gefertigt werden, wie beispielweise gerollte Lagerbuchsen oder Anlaufscheiben. Ferner kann ein solcher bandförmiger Werkstoff mit einem anderen Werkstoff zu einem bandförmigen Werkstoffverbund gefügt werden. Als Fügeverfahren eignen sich bevorzugt Plattierverfahren, insbesondere laserunterstütztes Walzplattieren. Werkstoffverbunde aus einem kupferbasierten Lagermetall und einem Trägerwerkstoff, wie beispielsweise Stahl, können als Ausgangsmaterial für die Herstellung von Lagerhalbschalen verwendet werden.

Ein weiterer Aspekt der Erfindung betrifft ein Verfahren zur Herstellung eines Halbzeugs aus einer erfindungsgemäßen Kupfer-Zink-Legierung, wobei das Verfahren folgende Schritte umfasst:

a) Erschmelzen der Legierung,
b) Gießen eines Gussformats,
c) Kaltumformen,

d) Wärmebehandlung.

Das Verfahren umfasst dabei als Umformschritte lediglich Kaltumformungen. Die erfindungsgemäße Legierung weist ein Gefüge auf, das aus einer $\alpha$-Phase-Matrix besteht, in der Einlagerungen an Mangansiliziden mit globularer Gestalt mit einem Anteil von mindestens 2 Vol.-% und bis zu 5 Vol.-% enthalten sind. Die spezielle Kombination aus reiner $\alpha$-Phase-Matrix und darin eingelagerten, besonders konditionierten Mangansiliziden ermöglicht die Herstellung von Halbzeugen, ohne eine Warmumformung durchführen zu müssen. Dabei wird die erfindungsgemäße Legierung erschmolzen, als ein geeignetes Gussformat abgegossen und abgekühlt. Hierbei ist darauf zu achten, dass das Erstarren und Abkühlen der Legierung so rasch erfolgt, dass die Bildung von großen Siliziden durch Diffusion weitgehend unterdrückt wird. Das abgekühlte Gussformat wird in einer oder mehreren Kaltumformungen bis an das Endformat umgeformt. Nach dem Gießen, zwischen den einzelnen Kaltumformstufen und nach der letzten Kaltumformung können Wärmebehandlungen erfolgen. Temperaturverlauf und Dauer der Wärmebehandlungen sind geeignet auszuwählen. Falls erforderlich kann ferner vor einer Kaltumformung die Oberfläche des Zwischenprodukts spanabhebend bearbeitet werden. Der Vorteil dieses Herstellverfahrens für Halbzeuge ist der geringe Energieverbrauch, da eine Erwärmung des Materials zur Durchführung einer Warmumformung entfallen kann.

Bei einer vorteilhaften Ausführungsform des erfindungsgemäßen Verfahrens kann zur Herstellung eines bandförmigen Halbzeugs im Verfahrensschritt b) ein Band mit einer Dicke von nicht mehr als 20 mm, bevorzugt von nicht mehr als 15 mm, gegossen werden. Bei einem solchen Bandgussverfahren wird also nicht eine großformatige Bramme, sondern ein relativ dünnes Band gegossen. Die Breite des gegossenen Bandes liegt typischerweise zwischen 200 und 600 mm. Aufgrund der geringen Dicke des Gussbandes sind bis zur Erreichung der Endabmessung des Bandes als Umformschritte lediglich Kaltwalzschritte erforderlich. Das Warmwalzen einer großformatigen Bramme kann entfallen. Ferner sind insgesamt vergleichsweise wenig Kaltwalzschritte notwendig. Die Anzahl der Kaltwalzschritte ist abhängig von der Dicke des gegossenen Bandes und der Dicke des fertigen Bandes. Bei einer typischen Ausgestaltung des erfinderischen Verfahrens wird die Dicke des Bandes in jedem Kaltwalzschritt um mindestens 20 % und um höchstens 50 % ihrer jeweiligen Ausgangsdicke reduziert. Damit beträgt die Anzahl der Kaltwalzschritte typischerweise mindestens zwei und höchstens fünf. Das Herstellverfahren ist folglich sehr kostengünstig.

Bei diesem Herstellverfahren ist die Einhaltung des Phosphoranteils von besonders großer Bedeutung, da das Gießen eines dünnen Bandes eine dünnflüssige Schmelze, also eine Schmelze mit geringer Viskosität erfordert. Der Aluminiumanteil der Legierung kann bei diesem Herstellverfahren bevorzugt mindestens 0,2 Gew.-% betragen. Der positive Einfluss von Aluminium beim Abschrecken der Legierung mit Wasser ist bei diesem Verfahren wichtig.

Bei einer besonders vorteilhaften Ausführungsform des erfindungsgemäßen Verfahrens kann in Verfahrensschritt b) das Gießen des Bandes kontinuierlich erfolgen. Durch das kontinuierliche Gießen des Bandes werden die Herstellkosten weiter reduziert. Unregelmäßigkeiten in der Zusammensetzung und im Gefüge des Werkstoffs, die beim Beginn des Gießvorgangs auftreten können, sind beim kontinuierlichen Bandgießen unbedeutend.

Ein weiterer Aspekt der Erfindung betrifft ein Gleitelement, welches ganz oder zumindest teilweise aus einer erfindungsgemäßen Kupfer-Zink-Legierung besteht. Die mit der Erfindung erzielten Vorteile bestehen insbesondere darin, dass sich ein derartiges Gleitelement durch hervorragende tribologische Eigenschaften auszeichnet. Der Werkstoff des Gleitelements weist eine $\alpha$-Phase-Matrix mit einem kubisch-flächenzentrierten Kristallgitter auf. Damit weicht der Werkstoff von üblichen Messingwerkstoffen für Gleitanwendungen ab. Messingwerkstoffe mit kubisch-flächenzentriertem Kristallgitter neigen im Unterschied zu Werkstoffen mit $\beta$-Phase erfahrungsgemäß zur Adhäsion. Entgegen dieser Erfahrung zeigt ein Gleitelement, welches ganz oder zumindest teilweise aus einem Werkstoff aus einer erfindungsgemäßen Legierung besteht, keine Adhäsionsneigung und es besitzt eine sehr gute Verschleißfestigkeit.

Bevorzugt ist der Teil des Gleitelements, der aus einer erfindungsgemäßen Legierung besteht, durch ein Verfahren wie vorstehend beschrieben hergestellt. Das Verfahren umfasst dabei als Umformschritte lediglich Kaltumformungen. Der Werkstoff des erfindungsgemäßen Gleitelements weist ein Gefüge auf, das aus einer $\alpha$-Phase-Matrix besteht, in der Einlagerungen an Mangansiliziden mit globularer Gestalt mit einem Anteil von mindestens 2 Vol.-% und bis zu 5 Vol.-% enthalten sind. Die spezielle Kombination aus reiner $\alpha$-Phase-Matrix und darin eingelagerten, besonders konditionierten Mangansiliziden ermöglicht die Herstellung des Gleitelements, ohne eine Warmumformung durchführen zu müssen.

Ein weiterer Aspekt der Erfindung betrifft ein Gleitelement, welches ganz oder zumindest teilweise aus einem erfindungsgemäßen bandförmigen Werkstoff wie vorstehend beschrieben besteht. Insbesondere kann der Teil des Gleitelements, der aus einer erfindungsgemäßen Legierung besteht, durch das vorstehend beschriebene Bandgussverfahren hergestellt sein. Die besonderen Vorteile eines solchen Gleitelements sind seine geringen Herstellkosten und seine hervorragenden tribologischen Eigenschaften. Beispiele für derartige Gleitelemente sind gerollte Lagerbuchsen, Anlaufscheiben und Synchronringe.

Die Erfindung wird anhand der folgenden Ausführungsbeispiele und anhand der Figur näher erläutert. Es zeigt:

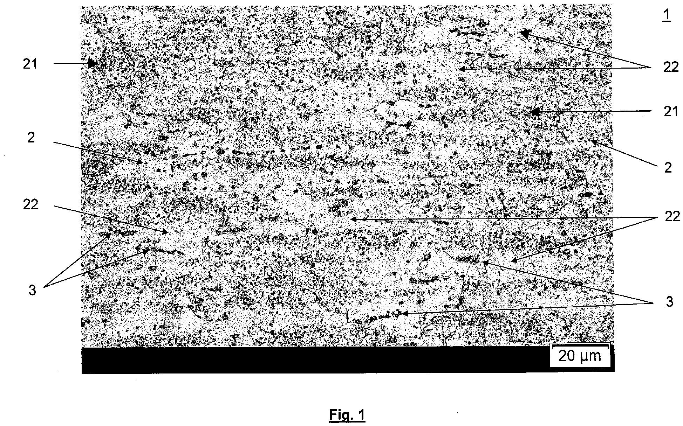

Fig. 1    ein Schliffbild eines Werkstoffs aus einer erfindungsgemäßen Legierung

Für Versuche wurden zwei erfindungsgemäße Legierungen sowie vier Vergleichslegierungen hergestellt. Die Zusammensetzung der Legierungen in Gew.-% ist in Tabelle 1 dokumentiert. In der vorletzten Spalte der Tabelle ist das jeweilige Zn-Äquivalent (in Gew.-%) ausgewiesen. In der letzten Spalte ist der Wert für das Verhältnis von Cu-Anteil der Legierung zum Zn-Äquivalent der Legierung angegeben. Die beiden Versuchslegierungen gemäß Zeilen 1 und 2 der Tabelle 1 sowie die Vergleichslegierung 4 weisen eine reine $\alpha$-Phase-Matrix auf, während die drei Vergleichslegierungen 1, 2 und 3 gemäß Zeilen 3 bis 5 ein Gefüge mit $\alpha$- und $\beta$-Phase aufweisen. Ursache für Letzteres ist das relativ große Zn-Äquivalent dieser Legierungen.

| | Cu | Zn | Mn | Fe | Ni | Si | Al | P | Pb | Sn | sonstige | Zn-äqu | Cu/Zn-äqu |
|---|---|---|---|---|---|---|---|---|---|---|---|---|---|
| **Versuch 1** | 67,5 | 30,2 | 1,32 | 0,08 | 0,14 | 0,43 | 0,25 | 0,035 | 0,05 | 0,002 | 0,02 | 31,572 | 2,14 |
| **Versuch 2** | 68,3 | 29,3 | 1,35 | 0,05 | 0,10 | 0,46 | 0,33 | 0,043 | 0,03 | 0,002 | 0,02 | 31,214 | 2,19 |
| **Vergleich 1** | 63,8 | 31,4 | 1,90 | 0,33 | 0,58 | 0,93 | 0,91 | 0,003 | 0,07 | 0,008 | 0,04 | 36,40 | 1,75 |
| **Vergleich 2** | 65,0 | 30,2 | 1,94 | 0,30 | 0,76 | 0,84 | 0,80 | 0,004 | 0,09 | 0,032 | 0,01 | 34,31 | 1,89 |
| **Vergleich 3** | 64,5 | 32,7 | 0,89 | 0,26 | 0,40 | 0,63 | 0,49 | 0,003 | 0,06 | 0,007 | 0,04 | 35,35 | 1,82 |
| **Vergleich 4** | 69,7 | 27,9 | 0,88 | 0,23 | 0,38 | 0,42 | 0,43 | 0,036 | 0,04 | 0,008 | 0,02 | 30,19 | 2,31 |

## Tabelle 1: Zusammensetzung der Versuchs- und Vergleichslegierungen in Gew.-%

Die Legierungen wurden jeweils in einer Menge von ungefähr 3000 kg erschmolzen und als Band mit einer Dicke von 13 mm kontinuierlich abgegossen. Das gegossene Band wurde schnell abgekühlt, geglüht, gefräst und in vier Kaltumformschritten mit jeweiliger Zwischenglühung an eine Banddicke von 2,5 mm gewalzt. Abschließend wurde es einer Wärmebehandlung zum Spannungsabbau unterzogen. Die beiden Versuchslegierungen gemäß Zeilen 1 und 2 der Tabelle 1 sowie die Vergleichslegierung 4 ließen sich ohne Schwierigkeiten an das Endmaß walzen, während sich die Vergleichslegierungen 1, 2 und 3 nur unbefriedigend verarbeiten ließen: Vergleichslegierungen 1 und 2 zeigten bereits beim Gießen Fehler. Die Reduktion der Silizide bildenden Elemente bei Vergleichslegierung 3 führte zwar zu einem stabilen Gießprozess, jedoch neigte diese Legierung beim Kaltwalzen zur Rissbildung und anderen Problemen. Diesbezüglich konnte bei Vergleichslegierung 4 eine Verbesserung erzielt werden, indem gegenüber der Vergleichslegierung 3 der Kupferanteil angehoben und der Zinkanteil reduziert und somit eine Matrix mit reinem $\alpha$-Gefüge erzeugt wurde.

Die Duktilität von Lagerwerkstoffen sowohl bei Umgebungstemperatur als auch bei erhöhter Temperatur ist bei hochbelasteten Lagern eine wichtige Eigenschaft. Mit Proben, die eine Legierungszusammensetzung gemäß Versuch 2 hatten, wurden deshalb die Bruchdehnungswerte bei 20 °C und bei 300 °C ermittelt. Bei einer Banddicke von 2,5 mm konnte eine Bruchdehnung von 28 % bei 20 °C und von über 40 % bei 300 °C erreicht werden. Bei einer weiteren Probe, deren Banddicke nach fünf Kaltumformschritten 1,2 mm betrug, lag die Bruchdehnung immer noch über 20 % bei 20 °C und über 25 % bei 300 °C. Vergleichsproben, die aus der Legierung gemäß der Zeile ,Vergleich 3' hergestellt wurden, erreichten zwar bei Umgebungstemperatur Bruchdehnungswerte, die nur wenig unterhalb denen der erfinderischen Legierung liegen, bei 300 °C konnten aber mit den Vergleichsproben Bruchdehnungswerte von lediglich 12 % bei einer Banddicke von 1,2 mm bzw. 6 % bei einer Banddicke von 2,5 mm erzielt werden. Auch an Vergleichsproben, die aus der Legierung gemäß der Zeile 'Vergleich 4' hergestellt wurden, wurde bei 300 °C ein geringerer Bruchdehnungswert festgestellt als bei 20 °C. Dieser Vergleich zeigt die besonderen Vorteile der erfinderischen Legierung für Anwendungen mit hochbelasteten Lagern.

Proben aus den Legierungen 'Versuch 2' und 'Vergleich 4' wurden Verschleißtests unterzogen. Dabei zeigte die Probe aus der erfinderischen Legierung 'Versuch 2' deutlich bessere Eigenschaften als die Probe aus der Legierung 'Vergleich 4'. Im Verschleißtest war der Materialabtrag bei der Probe 'Versuch 2' um ungefähr 30 % geringer als bei der Probe 'Vergleich 4'. Dieser Vergleich zeigt, dass die Auswahl der Silizide bildenden Elemente, nämlich Mn, Si, Fe und Ni, in einem sehr engen Fenster erfolgen muss, um einen Werkstoff mit günstigen Eigenschaften als Gleitlager zu erzeugen.

Fig. 1 zeigt ein Schliffbild einer erfindungsgemäßen Legierung gemäß Versuch 2. Man erkennt, dass das Gefüge des Werkstoffs 1 nur aus einer Phase, nämlich der $\alpha$-Phase besteht. In diese Matrix sind fein verteilt Mangan-

silizide 2 mit globularer Gestalt eingelagert. Die einzelnen globularen Mangansilizide 2 sind sehr klein. Die Verteilung der globularen Mangansilizide 2 ist nicht vollständig homogen. Es gibt Bereiche 21, in denen die Dichte der globularen Mangansilizide 2 gegenüber der durchschnittlichen Dichte erhöht ist. Ebenso gibt es Bereiche 22, in denen die Dichte der globularen Mangansilizide 2 gegenüber der durchschnittlichen Dichte verringert ist. Diese Bereiche 22 erscheinen als hellere Flecken im Schliffbild. Diese Variation der Dichte der globularen Mangansilizide 2 lässt ein Bild entstehen, in dem Anhäufungen an globularen Mangansiliziden 2 wie Wolken erscheinen.

Neben den globularen Mangansiliziden 2 sind Mangansilizide 3 mit stängeliger Gestalt sichtbar. Wie gut zu erkennen ist, sind bei den stängeligen Mangansiliziden 3 mehrere einzelne Silizidpartikel mit geringem Abstand zueinander entlang einer Linie angeordnet. Die einzelnen Silizidpartikel einer solchen Anordnung sind größer als die globularen Mangansilizide 2. Die Größe der einzelnen Silizidpartikel, die zu einem stängeligen Mangansilizid 3 gehören, liegt typischerweise im Bereich 1 $\mu$m bis 10 $\mu$m. Die Längserstreckung der stängeligen Mangansilizide 3 beträgt ungefähr 20 bis 30 $\mu$m, höchstens 40 $\mu$m. In unmittelbarer Nähe eines stängeligen Mangansilizids 3 sind deutlich weniger globulare Mangansilizide 2 zu finden als in den übrigen Bereichen. Diese Verarmung kann damit erklärt werden, dass beim Erstarren der Legierung die primären Ausscheidungen durch Diffusion lokal zu größeren Ausscheidungen zusammenwachsen. Diese größeren Ausscheidungen werden in den nachfolgenden Kaltumformungen zertrümmert und die Trümmer entlang der Umformrichtung verstreckt. Dies ergibt das spezielle Erscheinungsbild der stängeligen Mangansilizide 3.

Bezugszeichenliste

1      Werkstoff
2      Mangansilizid mit globularer Gestalt
21     Bereich mit hoher Dichte an Mangansiliziden mit globularer Gestalt
22     Bereich mit geringer Dichte an Mangansilizidenmit globularer Gestalt
3      Mangansilizid mit stängeliger Gestalt

**Patentansprüche**

**1.**   Kupfer-Zink-Legierung, bestehend aus (in Gew.-%):

67,0 bis 69,0 % Cu,
0,4 bis 0,6 % Si,
1,2 bis 1,6 % Mn,
0,03 bis 0,06 % P,
wahlweise noch bis maximal 0,5 % Al,
wahlweise noch bis maximal 0,15 % Ni,
wahlweise noch bis maximal 0,1 % Fe,
wahlweise noch bis maximal 0,1 % Pb,
wahlweise noch bis maximal 0,08 % Sn,
wahlweise noch bis maximal 0,1 % S,
Rest Zn und unvermeidbare Verunreinigungen,

**dadurch gekennzeichnet,**

- **dass** die Legierung ein Gefüge aufweist, das aus einer $\alpha$-Phase-Matrix besteht, in der Einlagerungen an Mangansiliziden (2) mit globularer Gestalt mit einem Anteil von mindestens 2 Vol.-% und höchstens 5 Vol.-% enthalten sind.

**2.**   Kupfer-Zink-Legierung nach Anspruch 1, **dadurch gekennzeichnet, dass** das Verhältnis vom Cu-Anteil der Legierung zum Zn-Äquivalent der Legierung mindestens 2,1 und höchstens 2,4 beträgt, wobei das Zn-Äquivalent der Legierung wie folgt aus den Anteilen der jeweiligen Legierungselemente berechnet wird (in Gew.-%):

$$\text{Zn-Äquivalent} = \text{Anteil Zn} + 0,9 \times \text{Anteil Fe} - 1,3 \times \text{Anteil Ni} + 6 \times \text{Anteil Al} + 2 \times \text{Anteil Sn}.$$

3. Kupfer-Zink-Legierung nach Anspruch 1 oder 2, **dadurch gekennzeichnet, dass** die Summe aus Eisen- und Nickelanteil höchstens 0,22 Gew.-% beträgt.

4. Kupfer-Zink-Legierung nach einem der Ansprüche 1 bis 3, **dadurch gekennzeichnet, dass** die Mangansilizide (2) mit globularer Gestalt in fein verteilter Form in der Matrix vorliegen und eine Größe von höchstens 1 $\mu$m aufweisen, wobei 30 bis 50 Mangansilizide (2) mit globularer Gestalt pro 100 $\mu$m$^2$ vorhanden sind.

5. Kupfer-Zink-Legierung nach einem der Ansprüche 1 bis 4, **dadurch gekennzeichnet, dass** in der Matrix zusätzlich Mangansilizide (3) mit stängeliger Gestalt enthalten sind, wobei die Längserstreckung dieser Mangansilizide (3) höchstens 50 $\mu$m beträgt und wobei die Anzahl der Mangansilizide (3) mit stängeliger Gestalt höchstens 2 % der Anzahl der Mangansilizide (2) mit globularer Gestalt ist.

6. Bandförmiger Werkstoff aus einer Kupfer-Zink-Legierung nach einem der Ansprüche 1 bis 5.

7. Verfahren zur Herstellung eines Halbzeugs aus einer Kupfer-Zink-Legierung nach einem der Ansprüche 1 bis 6, wobei das Verfahren folgende Schritte umfasst:

    a) Erschmelzen der Legierung,
    b) Gießen eines Gussformats,
    c) Kaltumformen,
    d) Wärmebehandlung,

    **dadurch gekennzeichnet, dass** das Verfahren als Umformschritte lediglich Kaltumformungen umfasst.

8. Verfahren nach Anspruch 7 zur Herstellung eines bandförmigen Halbzeugs, **dadurch gekennzeichnet, dass** im Verfahrensschritt b) ein Band mit einer Dicke von nicht mehr als 20 mm gegossen wird.

9. Verfahren nach Anspruch 8, **dadurch gekennzeichnet, dass** in Verfahrensschritt b) das Gießen des Bandes kontinuierlich erfolgt.

10. Gleitelement, **dadurch gekennzeichnet, dass** es ganz oder zumindest teilweise aus einer Kupfer-Zink-Legierung gemäß einem der Ansprüche 1 bis 5 besteht.

11. Gleitelement, **dadurch gekennzeichnet, dass** es ganz oder zumindest teilweise aus einem bandförmigen Werkstoff gemäß Anspruch 6 besteht.

**Claims**

1. Copper-zinc alloy consisting of (in wt.%):

    from 67.0 to 69.0 % Cu,
    from 0.4 to 0.6 % Si,
    from 1.2 to 1.6 % Mn,
    from 0.03 to 0.06 % P,
    optionally up to a maximum of 0.5 % Al,
    optionally up to a maximum of 0.15 % Ni,
    optionally up to a maximum of 0.1 % Fe,
    optionally up to a maximum of 0.1 % Pb,
    optionally up to a maximum of 0.08 % Sn,
    optionally up to a maximum of 0.1 % S,
    residual Zn and unavoidable impurities,

**characterised in that** the alloy has a structure which consists of an $\alpha$-phase matrix in which inclusions of manganese silicides (2) having a globular shape are present in a proportion of at least 2 vol.% and not more than 5 vol.%.

2. Copper-zinc alloy according to claim 1, **characterised in that** the ratio of the proportion of Cu in the alloy to the Zn equivalent in the alloy is at least 2.1 and not more than 2.4, the Zn equivalent in the alloy being calculated as follows from the proportions of the respective alloying elements (in wt.%):

$$\text{Zn equivalent} = \text{proportion of Zn} + 0.9 \times \text{proportion of Fe} - 1.3 \times \text{proportion of Ni} + 6 \times \text{proportion of Al} + 2 \times \text{proportion of Sn}.$$

3. Copper-zinc alloy according to either claim 1 or claim 2, **characterised in that** the sum of the proportion of iron and proportion of nickel is not more than 0.22 wt.%.

4. Copper-zinc alloy according to any one of claims 1 to 3, **characterised in that** the manganese silicides (2) having a globular shape are finely distributed in the matrix and have a size of not more than 1 $\mu$m, from 30 to 50 manganese silicides (2) having a globular shape being present per 100 $\mu m^2$.

5. Copper-zinc alloy according to any one of claims 1 to 4, **characterised in that** manganese silicides (3) having a columnar shape are additionally contained in the matrix, the longitudinal extension of these manganese silicides (3) being not more than 50 $\mu$m, and the number of the manganese silicides (3) having a columnar shape being not more than 2 % of the number of the manganese silicides (2) having a globular shape.

6. Band-like material made of a copper-zinc alloy according to any one of claims 1 to 5.

7. Method for producing a semi-finished product made of a copper-zinc alloy according to any one of claims 1 to 6, the method comprising the following steps:

    a) melting the alloy,
    b) casting a refinery shape,
    c) cold forming,
    d) heat treating,

**characterised in that** the method comprises only cold forming steps as forming steps.

8. Method according to claim 7 for producing a band-like semi-finished product, **characterised in that** a band having a thickness of not more than 20 mm is cast in method step b).

9. Method according to claim 8, **characterised in that** the band is cast continuously in method step b).

10. Sliding element, **characterised in that** it consists entirely of, or comprises at least in part, a copper-zinc alloy according to any one of claims 1 to 5.

11. Sliding element, **characterised in that** it consists entirely of, or comprises at least in part, a band-like material according to claim 6.

**Revendications**

1. Alliage de cuivre-zinc, constitué de (en % en masse) :

    67,0 à 69,0 % de Cu,
    0,4 à 0,6 % de Si,
    1,2 à 1,6 % de Mn,
    0,03 à 0,06 % de P,
    éventuellement encore jusqu'à un maximum de 0,5 % d'Al,
    éventuellement encore jusqu'à un maximum de 15 % de Ni,

éventuellement encore jusqu'à un maximum de 0,1 % de Fe,
éventuellement encore jusqu'à un maximum de 0,1 % de Pb,
éventuellement encore jusqu'à un maximum de 0,08 % de Sn,
éventuellement encore jusqu'à un maximum de 0,1 % de S,
un reste de Zn et d'impuretés inévitables,

**caractérisé**
**en ce que** l'alliage présente une structure qui est constituée d'une matrice de phase $\alpha$, dans laquelle sont contenues des inclusions de siliciures de manganèse (2) avec une structure globulaire avec une part d'au moins 2 % en volume et d'au plus 5 % en volume.

2. Alliage de cuivre-zinc selon la revendication 1, **caractérisé en ce que** le rapport de part de Cu de l'alliage à équivalent de Zn de l'alliage est d'au moins 2,0 et d'au plus 2,4, l'équivalent de Zn de l'alliage étant calculé comme suit à partir des parts des éléments d'alliage correspondants (en % en masse) :

$$\text{équivalent de Zn} = \text{part de Zn} + 0,9 \times \text{part de Fe} - 1,3 \times \text{part de Ni} + 6 \times \text{part d'Al} + 2 \times \text{part de Sn.}$$

3. Alliage de cuivre-zinc selon la revendication 1 ou 2, **caractérisé en ce que** la somme des parts de fer et de nickel est d'au plus 0,22 % en masse.

4. Alliage de cuivre-zinc selon l'une quelconque des revendications 1 à 3, **caractérisé en ce que** les siliciures de manganèse (2) avec une structure globulaire sont présents dans une forme dispersée dans la matrice et présentent une taille d'au plus 1 $\mu$m, de 30 à 50 siliciures de manganèse (2) avec une structure globulaire étant présents pour 100 $\mu$m$^2$.

5. Alliage de cuivre-zinc selon l'une quelconque des revendications 1 à 4, **caractérisé en ce que** dans la matrice des siliciures de manganèse (3) avec une structure de tige sont de plus contenus, l'allongement longitudinal de ces siliciures de manganèse (3) étant d'au plus 50 $\mu$m et le nombre des siliciures de manganèse (3) avec une structure de tige étant d'au plus 2 % du nombre des siliciures de manganèse (2) avec une structure globulaire.

6. Matériau en forme de bande constitué d'un alliage de cuivre-zinc selon l'une quelconque des revendications 1 à 5.

7. Procédé pour la préparation d'un demi-produit constitué d'un alliage de cuivre-zinc selon l'une quelconque des revendications 1 à 6, le procédé comprenant les étapes suivantes :

    a) fusion de l'alliage,
    b) coulée d'un format de coulée,
    c) déformation à froid,
    d) traitement thermique,

**caractérisé en ce que** le procédé comprend comme étapes de déformation uniquement des déformations à froid.

8. Procédé selon la revendication 7 pour la préparation d'un demi-produit en forme de bande, **caractérisé en ce que** dans l'étape de procédé b) une bande avec une épaisseur qui n'est pas supérieure à 20 mm est coulée.

9. Procédé selon la revendication 8, **caractérisé en ce que** dans l'étape de procédé b), la coulée de la bande est réalisée en continue.

10. Elément de glissement, **caractérisé en ce qu'**il est constitué totalement ou au moins partiellement d'un alliage de cuivre-zinc selon l'une quelconque des revendications 1 à 5.

11. Elément de glissement, **caractérisé en ce qu'**il est constitué totalement ou au moins partiellement d'un matériau en forme de bande selon la revendication 6.

**Fig. 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 09316570 A
- DE 102005059391 A1
- DE 102007029991 B4
- US 20130089459 A1